# EUROPEAN PATENT APPLICATION

(11) **EP 1 338 816 A2**
(43) Date of publication of application: **27.08.2003**
(21) Application number: 03251101.6
(22) Date of filing: 06.02.2003
(51) Int. Cl.: F16D 43/10

(54) **Rotation transmitting apparatus**

(30) Priority: 19.02.2002 JP 2002042175
(71) Applicant: NTN CORPORATION, Osaka (JP)
(72) Inventor: Saito, Takahide, Iwata-shi, Shizuoka-ken (JP)
(74) Representative: Knott, Stephen Gilbert

(57) **Abstract**

A rotation transmitting apparatus in which a cylindrical surface 2a is formed on the inner surface of an outer ring 2; an input shaft 4 is rotatably supported in the outer ring 2; a plurality of cam surfaces 6 for forming the wedge-shaped spaces cooperating with the cylindrical surface 2a are formed on the input shaft 4; rollers 9 are held in the cage 7 for engageable the cylindrical surface2a and the cam surface 6 due to relative rotation between the outer ring 2 and the input shaft 4; a two-way clutch "C" has a switching spring 12 for keeping the rollers 9 at their neutral positions; an armature 13 is arranged at one end of the cage 7 so as not to be rotated relative to the cage 7; a friction applying means comprises the end surface of the armature 13; an inclined surface 16 opposed to the end surface and extending radially outward gradually toward the end surface of the armature 13; and a plurality of weights 19 arranged within an annular space formed between the end surface 13b of the armature 13 and the inclined surface 16.

## Description

### BACKGROUND OF THE INVENTION

### Field of the Invention

The present invention relates to a rotation transmitting apparatus used for switching on/off a driving force in a power train of a vehicle, and more particularly, to a rotation transmitting apparatus using rollers as engagement elements.

### Description of Background Art

It is known an electromagnetic roller clutch in which connection and disconnection of two shafts are electromagnetically controlled and which has a relatively large transmission capacity. The electromagnetic roller clutch is a mechanism using rollers as the engagement elements and switching on/off two shafts by controlling the position of rollers due to the action of electromagnetic force. One example thereof is disclosed in Japanese Laid-open Patent publication No. 336799/1999 which will be hereinafter described.

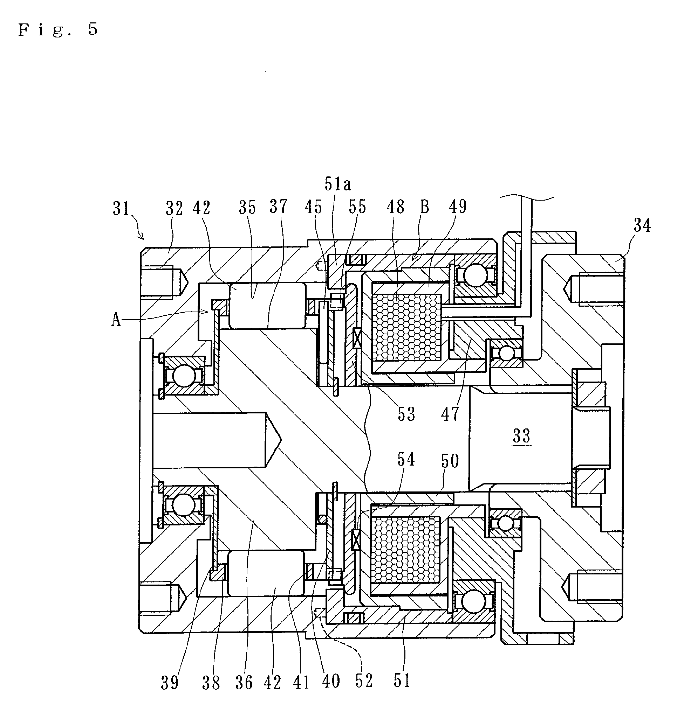

As shown in Fig. 5, the rotation transmitting apparatus 31of the prior art comprises an outer ring 32 as a following member, an input shaft 33 supported by the outer ring 32 via a roller bearing, a two-way clutch "A" arranged between the outer ring 32 and the input shaft 33, and an electromagnetic clutch "B" for actuating the two-way clutch "A".

The two-way clutch "A" comprises a cylindrical surface 35 formed on the inner surface of the outer ring 32, and a plurality of flat cam surfaces 37 formed on the outer surface of a larger diameter portion of the input shaft 33 spaced equidistantly in a circumferential direction and thus forming a plurality of wedge-shaped spaces between the cam surface 37 and inner cylindrical surface 32 of the outer ring 32. A cage 38 for retaining rollers 42 is arranged in an annular space between the outer ring 32 and the input shaft 33 and is rotatably supported on the input shaft 33 via plates 39 and 40 arranged either sides of the cage 38. The cage 38 is formed with pockets 41 of same number as that of the cam surfaces 37 for containing therein rollers 42 as engagement elements. The rollers 42 engage the wedge-shaped spaces between the cam surfaces 37 and the inner cylindrical surface 35 and integrally connect the outer ring 32 and the input shaft 33 when the cage 38 is moved circumferentially by a predetermined amount of movement. A switching spring 45 is mounted between the cage 38 and the input shaft 33 with being kept in its deflected condition in order to normally maintain the rollers 42 in their neutral positions i.e. positions in which there are radial gaps between the rollers 42 and the inner cylindrical surface 35 of the outer ring 32. In the neutral position, the input shaft 33 does not engage the outer ring 32 and thus the outer ring 32 is in a freely rotatable condition.

The electromagnetic clutch "B" is formed by a field core 49 for containing an electromagnetic coil 48 secured to a stationary portion 47 partially projected from the end of the outer ring 32, and a rotor 50 externally fitted around the field core 49 rotatably thereto, the rotor 50 being press-fitted in a rotor guide 51 which is also press-fitted in the outer ring 32.

There is arranged in a space with an axial gap between the rotor 50 and a flange 51a of the rotor guide 51 an armature 53 adapted to be attracted by the magnetic force generated by the electromagnetic coil 48. A wave-shaped spring 54 is arranged between the armature 53 and the rotor 50 to urge the armature 53 away from the rotor 50. The armature 53 is mounted on the end of the cage 38 so as not to be rotatable relative to the cage but to be axially movable.

In this rotation transmitting apparatus 31, the two-way clutch "A" is kept in the neutral position by the switching spring 45 when the electromagnetic coil 48 is not actuated and thus the outer ring 32 is in freely rotatable condition.

On the other hand, the armature 53 is attracted onto the rotor 50 overcoming the force of the wave-shaped spring 54 and thus friction is generated therebetween when a current is applied to the electromagnetic coil 48. This frictional force integrally connects the outer ring 32 and the cage 38 and thus the rollers 42 are moved from their neutral positions to their engagement positions with the wedge-shaped spaces and accordingly the outer ring 32 and the input shaft 33 are integrally connected via the two-way clutch "A".

In such a conventional rotation transmitting apparatus 31, the connection and disconnection of the two-way clutch "A" is carried out by applying friction between the rotor 50 fitted in the outer ring 32 integrally therewith and the armature 53 mounted movable only in the axial direction relative to the cage 38. The friction between the rotor 50 and the armature 53 is applied by supplying electric current to the electromagnetic coil 48.

### SUMMARY OF THE INVENTION

In the conventional rotation transmitting apparatus or the electromagnetic type roller clutch, it is required to use the electromagnetic coil and its electric wiring for supplying electric current thereto. Thus there is caused a problem attendant on the arrangement of wiring in a vehicle. Also there are other problems of reduction of electric power consumption, of structural restrictions as to magnetic field formation and thus it is difficult to reduce the weight and size of the apparatus.

It is therefore an object of the present invention to provide a rotation transmitting apparatus using a mechanical type friction applying means in place of the conventional electromagnetic type friction applying apparatus.

For achieving the object above, there is provided according to the present invention of claiml a rotation transmitting apparatus comprising an outer ring; an input shaft fitted in the outer ring; one of the opposite surfaces of the outer ring and the input shaft being formed with a cylindrical surface and the other of the opposite surfaces being formed with a plurality of cam surfaces each forming a wedge-shaped space relative to the cylindrical surface; a cage arranged in a space between the outer ring and the input shaft; rollers each being held in a pocket formed in the cage for engageable the cylindrical surface and the cam surface due to relative rotation between the outer ring and the input shaft; an elastic member arranged between the cage and the outer ring or the input shaft for keeping the rollers at their neutral positions at which the rollers do not engage the wedge-shaped spaces; an armature arranged at one end of the cage so as not to be rotated relative to the cage; and a friction applying means for urging the armature onto the end surface of the outer ring or the input shaft characterized in that: the friction applying means comprises the end surface of the armature; an inclined surface opposed to the end surface and extending radially outward gradually toward the end surface of the armature; and a plurality of weights arranged within an annular space formed between the end surface of the armature and the inclined surface, the weights being moved radially outward along the inclined surface by a centrifugal force caused by the rotation of the input shaft and urging the armature onto the end surface of the outer ring or the input shaft so as to make the rollers to be engaged with the wedge-shaped spaces to integrally connect the outer ring and the input shaft.

According to the present invention of claim 1, it is not required to use the electromagnetic coil and its electric wiring for supplying electric current thereto. Thus there is not caused a problem attendant on the arrangement of wiring in a vehicle. Also there are not any other problems of reduction of electric power consumption, of structural restrictions as to magnetic field formation and thus it is possible to reduce the weight and size of the apparatus.

According to the present invention of claim 2, the cylindrical surface is formed on the inner surface of the outer ring; the input shaft is rotatably supported in the outer ring via a bearing; the plurality of cam surfaces for forming the wedge-shaped spaces are formed on the outer surface of the input shaft; rollers each being held in a pocket formed in the cage for engageable the cylindrical surface and the cam surface due to relative rotation between the outer ring and the input shaft; an elastic member arranged between the cage and the input shaft for keeping the rollers at their neutral positions at which the rollers do not engage the wedge-shaped spaces. This structure enables to hold the rollers at the neutral position with a simple structure.

According to the present invention of claim 3, the elastic member is formed by a ring spring of substantially C-shaped configuration having projections at its ends; and the ends of the ring spring are anchored in notches formed in the ends of the member having the cam surface and the cage. This structure enables to set an appropriate the spring force and thus to stably hold the phase or position of the cage.

According to the present invention of claim 4, the armature is formed integrally with the cage. This structure enables not only to make easy assembly of the apparatus but to control the perpendicularity of the armature and thus to perform a stable switching function.

According to the present invention of claim 5, the cage is held rotatably via a predetermined radial gap relative to the outer ring or the input shaft. This structure enables not only to stably support the cage in a freely rotatable condition but to eliminate the conventional parts such as plates and to surely carry out the engagement and disengagement of all rollers. Accordingly it is possible to further improve the reduction of the weight and the size.

According to the present invention of claim 6, the apparatus further comprises a multi disc clutch arranged opposed to the armature. This structure enables to generates the friction which relieves the shock by absorbing the difference of rotation between the outer ring and the input shaft.

### BRIEF DESCRIPTION OF THE DRAWINGS

Additional advantages and features of the present invention will become apparent from the subsequent description and the appended claims, taken in conjunction with the accompanying drawings, wherein:
Fig. 1 is a longitudinal cross-section view showing a first embodiment of the rotation transmitting apparatus of the present invention;
Fig. 2 is a cross-section view taken along a line II-II in Fig. 1;
Fig. 3 is a cross-section view taken along a line III-III in Fig. 1;
Fig. 4 is a longitudinal cross-section view showing a second embodiment of the rotation transmitting apparatus of the present invention;
Fig. 5 is a longitudinal cross-section view showing a rotation transmitting apparatus of the prior art.

### DESCRIPTION OF THE PREFERRED EMBODIMENTS

The rotation transmitting apparatus 1 of the present invention comprises an outer ring 2 which freely rotatably receives an input shaft 4 via a roller bearing 3. A two-way clutch "C" is arranged between the outer ring 2 and the input shaft 4.

The two-way clutch "C" comprises an inner cylindrical surface 2a of the outer ring 2 and a plurality of cam surfaces 6 formed on an outer surface 5a of a larger diameter portion 5 of the input shaft 4 at a predetermined circumferential distance therebetween oppositely to the inner cylindrical surface 2a. Each cam surface 6 forms a wedge-shaped space cooperating with the inner cylindrical surface 2a of the outer ring 2.

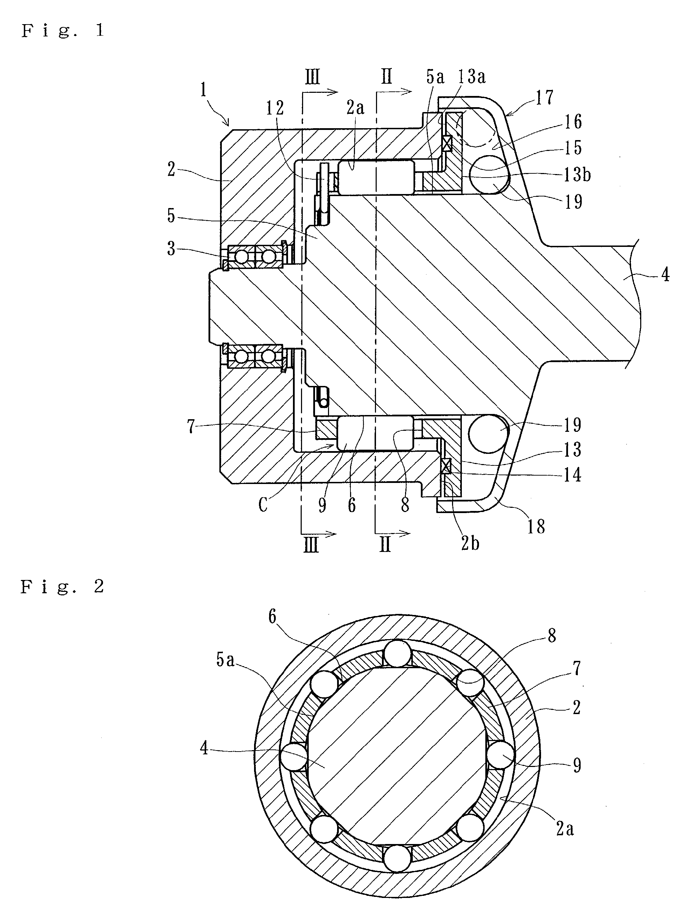

As shown in Fig. 2, a cage 7 is arranged between the outer surface 5a of the larger diameter portion 5 of the input shaft 4 and the inner cylindrical surface 2a of the outer ring 2 and is supported freely rotatably relative to the input shaft 4 via radial gap relative to the outer surface 5a of the input shaft 4. The cage 7 is formed with pockets 8 for containing rollers 9 therein acting as engagement elements along circumferential direction same number as those of the cam surfaces 6. Each roller 9 is arranged corresponding to each cam surface 6 of the input shaft 4 and engages the wedge-shaped space between the cam surface 6 and inner cylindrical surface 2a of the outer ring 2 when the rollers 9 are moved circumferentially at a predetermined amount of distance by the cage 7 to integrally connect the outer ring 2 and the input shaft 4.

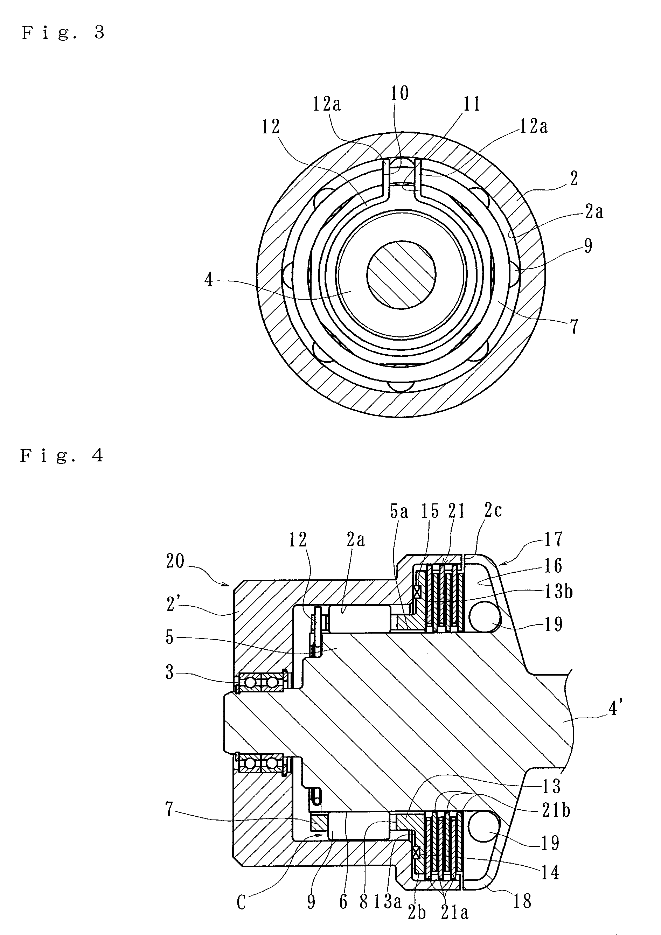

As shown in Fig.3, two ends of a switching spring 12 as an elastic member is snapped in notches 10 and 11 formed in end faces of the cage 7 and the input shaft 4 respectively. The switching spring is substantially "C"-shaped ring configuration and has projections 12a at its ends extending toward the cage 7. Any spring such as a coil spring or a leaf spring may be used as the elastic member replaced of the "C"-shaped spring to maintain a phase or an aligned position between the notches 10 and 11.

When the notches 10 and 11 of the cage 7 and the input shaft 4 are in the aligned position i.e. in the same phase, positional relation among the cam surfaces 6 of the input shaft 4, the pockets 8 of the cage 7 and the rollers 9 is held in the neutral position in which a radial gap exists between each roller 9 and the inner cylindrical surface 2a of the outer ring 2 as shown in Fig. 2. Accordingly, the outer ring 2 and the input shaft 4 do not engage each other and thus the input shaft 4 is in the condition freely rotatable relative to the outer ring 2.

As shown in Fig. 1, the other end of the cage 7 is integrally formed with a radially outwardly extending armature 13. An annular groove 14 formed in one end surface 13a of the armature 13 contains a wave-shaped spring 15 urging the armature 13 apart from an end surface 2b of the outer ring 2. Although the armature 13 may be formed separately from the cage 7 in a conventional manner, it is possible not only to reduce the number of parts, but to improve the easiness of assembly and to control the perpendicularity of the armature 13 in order to perform the stable switching function if the armature 13 is formed integrally with the cage 7 so as to be axially moved together with the cage. In addition, it is surely carry out to the engagement and disengagement of rollers 9 with the wedge-shaped space since the cage 7 can is not supported by plates as a conventional manner and thus is stably supported in the freely rotatable condition relative to the input shaft 4 via the radial gap between the cage 7 and the outer surface 5a of the input shaft 4.

The input shaft 4 is integrally formed with a switching portion 17 having an inclined surface 16 which is opposed to the other end surface 13b of the armature 13 and radially outwardly extends gradually toward the other end surface 13b of the armature 13. The switching portion 17 has a cylindrical portion 18 axially extending beyond the end surface 2b of the outer ring 2 to seal the inside via a labyrinth seal. A plurality of weight balls 19 of steel are contained within an annular space i.e. a ball chamber formed between said other end surface 13b of the armature 13 and the inclined surface 16. In the illustrated example, although it is shown a structure in which the switching portion 17 is formed integrally with the input shaft 4, a separate switching portion of press formed steel plate may be integrally connected to the input shaft 4.

Hardened surfaces are formed on surfaces of the inclined portion 16 and the cage 7, for example, by heat treatment such as the cementation process to reduce wear caused by contact of balls. Preferably the cage 7 is heat treated by the carbonitriding process or the nitrocarburizing in order to suppress the deformation by the heat treatment.

The weight balls 19 are positioned radially inward on its own weight within the ball chamber when the input shaft is stopped. On the other hand, the weight balls 19 are moved radially outward along the inclined surface 16 by the centrifugal force in accordance with the rotational speed when the input shaft 4 is rotated. The balls are urged into a wedge-shaped space formed by said end surface 13b of the armature 13 and the inclined surface 16 and thus the armature 13 is axially moved toward the end surface 2b of the outer ring 2 against the spring force of the wave-shaped spring 15. When the axially thrusting force F1 caused by the weight balls 19 is small than the spring force Fw (F1<Fw) at a low rotational speed, the end surface 13a of the armature 13 does not abut the end surface 2b of the outer ring 2. Accordingly, the friction therebetween is small and thus the rollers 9 are still held at the neutral position relative to the cam surface 6.

When the rotational speed increases and the axial force F2 exceeds the spring force Fw (F2 > Fw), a friction force µ F2 will be caused on the contacted surfaces of the end surface 13a of the armature 13 and the end surface 2b of the outer ring 2, wherein "µ" is the coefficient of friction. However the rollers 9 will be still held at the neutral position relative to the cam surface 6 unless the friction force µ F2 for holding the rollers 9 at the neutral position exceeds the holding force Fs of the switching spring 12, i.e. when µ F2<Fs.

When the rotational speed of the input shaft 4 further increases and the axial thrusting force F3 caused by the weight balls 19 exceeds the spring force Fw of the wave-shaped spring 15 (F3>Fw) as well as the friction force µ F3 exceeds the holding force Fs (µ F3>Fs), the cage 7 is moved by a predetermined amount of distance due to the relative rotation between the outer ring 2 and the input shaft 4 and thus the rollers 9 engage the wedge-shaped spaces between the cam surfaces 6 and the inner cylindrical surface 2a so that the outer ring 2 and the input shaft 1 is integrally connected.

In such a rotation transmitting apparatus, it is possible to reduce the number of parts since the switching of the engagement and disengagement of the two-way clutch "C" can be performed by the simple structure of the switching portion 17. In addition, since there is no structural limitation for forming the electromagnetic field, it is possible not only to reduce the weight and the size of the apparatus but to eliminate electric wires for supplying electric current to the electromagnetic coil and to solve the problem of arrangement of the wiring in the vehicle.

Although the two-way clutch "C" is shown in the illustrated example so that it is formed by the inner cylindrical surface 2a of the outer ring 2 and the cam surfaces 6 formed on the larger diameter portion 5 of the input shaft 4, it is possible to form the cylindrical surface on the input shaft and to form the cam surfaces on the inner surface of the outer ring.

Fig. 4 is a longitudinal cross-section view of a second embodiment of the rotation transmitting apparatus of the present invention. This embodiment is different from the first embodiment shown in Figs. 1 through 3 only in the structure of the switching portion. Accordingly, same reference numerals are used in the second embodiment to denote the same parts as those used in the first embodiment and the detailed description as to the same structure will be omitted.

This rotation transmitting apparatus 20 comprises an outer ring 2' as a following member, an input shaft 4' supported by the outer ring 2' via a roller bearing 3, and a two-way clutch "C" arranged between the outer ring 2' and the input shaft 4'.

In this rotation transmitting apparatus 20, the other end of the cage 7 is integrally formed with a radially outwardly extending armature 13. An annular groove 14 formed in one end surface 13a of the armature 13 contains a wave-shaped spring 15 urging the armature 13 apart from an end surface 2b of the outer ring 2'. The cage 7 is supported in the freely rotatable condition relative to the input shaft 4' via the radial gap between the cage 7 and the outer surface 5a of the input shaft 4'.

The input shaft 4' is integrally formed with a switching portion 17 having an inclined surface 16 which is opposed to the other end surface 13b of the armature 13 via a multi disc clutch 21 and radially outwardly extends gradually toward the other end surface 13b of the armature 13. The switching portion 17 has a cylindrical portion 18 opposed to end surface 2c of the outer ring 2' to seal the inside via a labyrinth seal. A plurality of weight balls 19 of steel are contained within an annular space formed between the multi disc clutch 21 and the inclined surface 16.

The multi disc clutch 21 comprises outer friction plates 21a mounted on the inner surface of the outer ring 2' and inner friction plates 21b mounted on the larger diameter portion 5 of the input shaft 4'. Each of the outer friction plates 21a and the inner friction plates 21b are arranged in an alternately opposed relation and all of these friction plates 21a and 21b are mounted on the outer ring 2' and the input shaft 4' respectively so that they can move axially but cannot rotate relative to their support members i.e. the outer ring 2' and the input shaft 4'.

The friction plates 21a and 21b are mutually pressed by the axial force caused by the weight balls 19 and generate frictional force therbetween when the weight balls 19 are moved radially outward and there is a difference in rotational speeds between the outer ring 2' and the input shaft 4'. This frictional force acts to absorb the difference in rotational speeds between the outer ring 2' and the input shaft 4'to relieve the shock. The multi disc clutch 21 may be a dry clutch, however it can use grease or oil used to lubricate the two-way clutch "C".

The present invention has been described with reference to the preferred embodiments. Obviously, modifications and alternations will occur to those of ordinary skill in the art upon reading and understanding the preceding detailed description. It is intended that the present invention be construed as including all such alternations and modifications insofar as they come within the scope of the appended claims or the equivalents thereof.

As described above, since the rotation transmitting apparatus of the present invention comprises two-way clutch between the outer ring and the input shaft and adopts the mechanical means using a centrifugal force as the friction applying means for switching the engagement and disengagement of the rollers of the two-way clutch, it is possible to eliminate electric wires for supplying electric current to the electromagnetic coil and to solve the problem of arrangement of the wiring in the vehicle. In addition, it is also possible to reduce the weight and the size of the apparatus.

## Claims

1. A rotation transmitting apparatus comprising an outer ring; an input shaft fitted in the outer ring; one of the opposite surfaces of the outer ring and the input shaft being formed with a cylindrical surface and the other of the opposite surfaces being formed with a plurality of cam surfaces each forming a wedge-shaped space relative to the cylindrical surface; a cage arranged in a space between the outer ring and the input shaft rollers each being held in a pocket formed in the cage for engageable the cylindrical surface and the cam surface due to relative rotation between the outer ring and the input shaft an elastic member arranged between the cage and the outer ring or the input shaft for keeping the rollers at their neutral positions at which the rollers do not engage the wedge-shaped spaces; an armature arranged at one end of the cage so as not to be rotated relative to the cage; and a friction applying means for urging the armature onto the end surface of the outer ring or the input shaft **characterized in that**:
the friction applying means comprises the end surface of the armature; an inclined surface opposed to the end surface and extending radially outward gradually toward the end surface of the armature; and a plurality of weights arranged within an annular space formed between the end surface of the armature and the inclined surface, the weights being moved radially outward along the inclined surface by a centrifugal force caused by the rotation of the input shaft and urging the armature onto the end surface of the outer ring or the input shaft so as to make the rollers to be engaged with the wedge-shaped spaces to integrally connect the outer ring and the input shaft.

2. A rotation transmitting apparatus of claim 1 in which the cylindrical surface is formed on the inner surface of the outer ring; the input shaft is rotatably supported in the outer ring via a bearing; the plurality of cam surfaces for forming the wedge-shaped spaces are formed on the outer surface of the input shaft; rollers each being held in a pocket formed in the cage for engageable the cylindrical surface and the cam surface due to relative rotation between the outer ring and the input shaft; an elastic member arranged between the cage and the input shaft for keeping the rollers at their neutral positions at which the rollers do not engage the wedge-shaped spaces.

3. A rotation transmitting apparatus of claim 1 or 2 in which the elastic member is formed by a ring spring of substantially C-shaped configuration having projections at its ends; and the ends of the ring spring are anchored in notches formed in the ends of the member having the cam surface and the cage.

4. A rotation transmitting apparatus of any one of claims 1 through 3 in which the armature is formed integrally with the cage.

5. A rotation transmitting apparatus of any one of claims 1 through 4 in which the cage is held rotatably via a predetermined radial gap relative to the outer ring or the input shaft.

6. A rotation transmitting apparatus of any one of claims 1 through 5 in which further comprising a multi disc clutch arranged opposed to the armature.
